# EUROPÄISCHE PATENTSCHRIFT

(11) **EP 3 446 807 B1**
(45) Veröffentlichungstag und Bekanntmachung des Hinweises auf die Patenterteilung: **04.11.2020**
(21) Anmeldenummer: 18186539.5
(22) Anmeldetag: 31.07.2018
(51) Int. Cl.: B21K 23/00, F16B 37/04

(54) **VERFAHREN ZUR HERSTELLUNG EINES SACKLOCHS**
METHOD FOR THE PRODUCTION OF A BLIND HOLE
PROCÉDÉ DE FABRICATION D'UN TROU BORGNE

(30) Priorität: 15.08.2017 DE 102017214210
(43) Veröffentlichungstag der Anmeldung: 27.02.2019
(73) Patentinhaber: Rixen, Wolfgang, 42699 Solingen (DE); Pies, Gerrit, 42699 Solingen (DE)
(72) Erfinder: Geisler, Tobias, 45549 Sprockhövel (DE)
(74) Vertreter: BRP Renaud & Partner mbB Rechtsanwälte Patentanwälte Steuerberater

(56) Entgegenhaltungen:
- EP-A1- 2 752 594
- WO-A1-2014/121899
- US-A- 5 502 994
- US-A- 6 145 365

## Beschreibung

Die vorliegende Erfindung betrifft ein Verfahren zur Herstellung eines Sacklochs in einem metallischen Werkstück gemäß dem Oberbegriff des Anspruchs 1. Die Erfindung betrifft außerdem eine Vorrichtung zur Durchführung dieses Verfahrens sowie einen nach diesem Verfahren und insbesondere mittels der Vorrichtung hergestellten Nutenstein.

Aus der WO 2014/121899 A1 ist ein gattungsgemäßes Verfahren zur Herstellung eines Sacklochs in einem mindestens eine gewölbte Oberfläche aufweisenden metallischen Werkstück bekannt, wobei ausgehend etwa von der waagerecht verlaufenden Wölbungstangente und in etwa quer dazu in Richtung des Materials des Werkstücks mittels einer Hubbewegung ein Teil des Materials verschoben wird. Zunächst wird dabei das Werkstück mit einer matrizenartigen Aufnahme für das zu verdrängende Material versehen und anschließend das Material des Werkstücks mittels eines Stempels in Achsrichtung der Aufnahme verschoben, wobei das vom Stempel getroffene Material teilweise in die Aufnahme fließt. Abschließend wird das bei der Aufnahme überstehende Material beseitigt.

Die vorliegende Erfindung beschäftigt sich mit dem Problem, für ein Verfahren der gattungsgemäßen Art eine verbesserte oder zumindest eine alternative Ausführungsform anzugeben, die sich insbesondere durch eine verbesserte Herstellungsqualität auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Verfahren zur Herstellung eines Sacklochs anzugeben, bei welchem ein Hochgeschwindigkeits-Scherschneiden und ein konventionelles Scherschneiden kombiniert eingesetzt werden und dadurch eine deutlich verbesserte Fertigungsqualität erreicht werden kann. Bei dem erfindungsgemäßen Verfahren zur Herstellung eines Sacklochs in einem, insbesondere mindestens eine gewölbte Oberfläche aufweisenden, metallischen Werkstück, wird zunächst eine im Wesentlichen zumindest teilweise komplementär zum Werkstück ausgebildete Negativform mit einem ersten und einem zweiten Teilbereich bereit gestellt, wobei im ersten Teil der Negativform eine im Wesentlichen koaxial zu dem herzustellenden Sackloch angeordnete Ausnehmung für bei der Herstellung des Sacklochs zu verdrängendem Material und im zweiten Teil der Negativform eine im Wesentlichen koaxial zum herzustellenden Sackloch angeordnete Führung für einen Stempel vorgesehen sind. Der Stempel weist dabei entweder einen größeren Durchmesser auf als die Ausnehmung, wodurch es bei dem später erfolgenden Scherschneideprozess zu einem Verdichten des Materials des metallischen Werkstücks im Bereich eines stirnseitigen Randes der Ausnehmung kommt, oder die Ausnehmung besitzt eine innenliegende Ringstufe, an der der Stempel beim Scherschneideprozess das Material des metallischen Werkstücks verdichtet. Zunächst wird jedoch das Werkstück, in welchem das Sackloch hergestellt werden soll, in der Negativform angeordnet. Der Stempel wird dann, insbesondere ausgehend von der waagerecht verlaufenden Wölbungstangente und in etwa orthogonal dazu, in Richtung des Materials des Werkstücks mittels einer Stoßbewegung unter Verdrängung eines Teils des Materials in das Werkstück geschoben, wobei der Stempel nach einem ersten Kontakt mit dem Werkstück in einem ersten Bewegungsabschnitt B₁ mit einer ersten Geschwindigkeit v₁ in das Werkstück gedrückt wird, so dass das von dem Stempel getroffene Material im ersten Bewegungsabschnitt B₁ in einem adiabatischen Zustand (Hochgeschwindigkeits-Scherschneiden) geschert wird. Anschließend wird der Stempel weiter in das Werkstück gedrückt und zwar über einen zweiten Bewegungsabschnitt B₂ mit einer zur ersten Geschwindigkeit v₁ kleineren zweiten Geschwindigkeit v₂, so dass das von dem Stempel getroffene Material im zweiten Bewegungsabschnitt B₂ geschert und an einer durch die unterschiedlichen Durchmesser der Ausnehmung (Innendurchmesser) und des Stempels (Außendurchmesser) gebildeten Ringstufe oder an der Ringstufe in der Ausnehmung verdichtet wird und zudem teilweise in die Ausnehmung fließt. Abschließend kann dann noch der zweite Teil der Negativform relativ zum ersten Teil verstellt werden und zwar orthogonal zu einer Sacklochachse und damit das in die Ausnehmung verdrängte Material des Werkstücks abgeschert werden, so dass in dem Werkstück ein Sackloch verbleibt. Die Eindrücktiefe t_{1,2} des Stempels im ersten und zweiten Bewegungsabschnitt B₁, B₂ ist dabei geringer als die Gesamthöhe H des Werkstücks, wodurch ein Sacklochboden verbleibt. Durch das erfindungsgemäße zweistufige Scherverfahren mit unterschiedlichen Geschwindigkeiten v₁, v₂, können aufgrund der im ersten Bewegungsabschnitt B₁ des Stempels vergleichsweise hohen Geschwindigkeit v₁ und des vergleichsweise kurzen Impuls, eine saubere Trennfläche mit hervorragender Oberflächenebenheit und zudem ohne relevante Gefügeänderungen erreicht werden. Im ersten Bewegungsabschnitt B₁ schert somit das Material ab und kann nicht abfließen, was ohne eine Reduzierung der Geschwindigkeit des Stempels im zweiten Bewegungsabschnitt B₂ unter Umständen zu einer Zerstörung der Negativform führen würde. Durch die erfindungsgemäße Reduzierung der Stempelgeschwindigkeit im zweiten Bewegungsabschnitt B₂ kann jedoch ein Fließen des abgescherten Materials in die Ausnehmung des ersten Teils der Negativform erreicht werden, wodurch ein Sackloch mit äußerst hoher Oberflächenqualität geschaffen werden kann. Aufgrund des impulsartigen Abscherens des Materials im ersten Bewegungsabschnitt B₁ hat die dabei entstehende Wärme keine Zeit in das übrige Werkstück oder den Stempel abzufließen. Zugleich wird im ersten Bewegungsabschnitt B₁ des Stempels eine Art Zylinder abgeschert, der dann im zweiten Bewegungsabschnitt B₂ des Stempels unter gleichzeitiger Verdichtung an einem stirnseitigen Rand der Ausnehmung oder an der Ringstufe in der Ausnehmung in dieselbe fließgepresst wird. Der Verdichtungsbereich ergibt sich dabei im Wesentlichen aus einer Differenz des Außendurchmessers des Stempels und des Innendurchmessers der Ausnehmung im ersten Teil der Negativform oder durch die Ringstufe in der Ausnehmung, durch welche der Zylinder/Butzen, der im ersten Bewegungsabschnitt B₁ des Stempels adiabatisch abgeschert wurde, teilweise abfließen kann. Durch das Abscheren kann es darüber hinaus zu einem punktuellen Verschweißen im Gefüge kommen, wodurch das Sackloch fertigungsbedingt besonders vorteilhaft ausgestaltet ist. Der Sacklochboden wird dabei zum einen durch die Verstauchung im Inneren und zum anderen durch die punktuelle Verschweißung im Bereich der Scherung gehalten bzw. fixiert. Dabei ist selbstverständlich klar, dass die verwendeten metallischen Werkstücke nicht unbedingt eine gewölbte Oberfläche aufweisen müssen, sondern selbstverständlich auch andere Oberflächen oder Querschnitte aufweisen können.

Gemäß der erfindungsgemäßen Lösung wird der Stempel im ersten Bewegungsabschnitt B₁ mit einer Tiefe t₁ von ca. 0,01H ≤ t₁ ≤ 0,5H in das Werkstück gedrückt. H bezieht sich dabei auf die Höhe des Werkstücks. Der erste Bewegungsabschnitt B₁, in welchem das Hochgeschwindigkeits-Scherschneiden erfolgt, erstreckt sich somit über lediglich 1 bis 50% der Höhe des Werkstücks, vorzugsweise sogar über weniger als 10% der Höhe H des Werkstücks, wodurch der im ersten Bewegungsabschnitt B₁ abgescherte Zylinder nur geringfügig nach unten verschoben bzw. verdichtet wird. Dies bietet den besonderen Vorteil, dass der Stempel vor einer übermäßigen Abnutzung verschont bleibt. Dadurch, dass der Stempel nur so gering wie nötig in das Werkstück eintaucht, lediglich um die adiabatische Scherung zu bewirken, kann der Stempel vor Abrasion geschützt werden. Die Abnutzung des Stempels ist während des zweiten Bewegungsabschnittes B₂ wesentlich geringer, da das Material in einen Fließzustand versetzt wird. Besonders positiv ist hierbei noch der Effekt, dass das Material um den Stempel ebenfalls in einen Fließzustand versetzt wird.

Gemäß der erfindungsgemäßen Lösung wird der Stempel im ersten Bewegungsabschnitt B₁ mit einer ersten Geschwindigkeit v₁ von ≥ 1 m/s, insbesondere mit einer Geschwindigkeit v₁ zwischen 6 m/s und 8m/s, besonders bevorzugt mit einer Geschwindigkeit v₁ von ungefähr 7 m/s in das Material des Werkstücks eingedrückt. Hierbei hat sich gezeigt, dass bei diesen Geschwindigkeiten bereits ein adiabatischer Zustand und damit ein Hochgeschwindigkeits-Scherschneiden erreicht werden kann.

Bei einer weiteren vorteilhaften Ausführungsform der erfindungsgemäßen Lösung wird der Stempel im zweiten Bewegungsabschnitt B₂ mit einer zweiten Geschwindigkeit v₂ von < 0,15m/s, insbesondere mit v₂ ≤ 0,005m/s, in das Werkstück gedrückt. Im zweiten Bewegungsabschnitt B₂ erfolgt somit ein herkömmliches Scherschneiden bzw. ein Fließpressen, bei welchem der abgetrennte Zylinder mit einer deutlich verringerten zweiten Geschwindigkeit v₂ des Stempels weiter durch das Werkstück getrieben und anschließend in die Ausnehmung des ersten Teils der Negativform fließgepresst wird. Dabei stützt sich der Zylinder zumindest teilweise mit seiner radial äußeren Stirnseite an einer im Durchmesser kleinere Ausnehmung des ersten Teils der Negativform oder an einer Ringstufe in der Ausnehmung ab. Das Material des Zylinders kann somit im Bereich dieser Ringstufe vorteilhafter Weise verdichtet werden, so dass ein nachfolgendes Abscheren des überstehenden Materials vorteilhaft möglich ist. Der Sacklochboden wird dabei zum einen durch die Verstauchung im Inneren und zum anderen durch die punktuelle Verschweißung im Bereich der Scherung gehalten bzw. fixiert.

Die vorliegende Erfindung beruht weiter auf dem allgemeinen Gedanken, eine Vorrichtung zur Durchführung des in den vorherigen Absätzen beschriebenen Verfahrens anzugeben, wobei diese Vorrichtung erfindungsgemäß eine zumindest teilweise komplementär zu einem zu bearbeitenden Werkstück ausgebildete Negativform mit einem ersten und einem zweiten Teil aufweist. Zwischen dem ersten und dem zweiten Teil kann dabei das zu bearbeitende Werkstück während des Herstellens des Sacklochs eingespannt werden. Im ersten Teil der Negativform ist dabei eine im Wesentlichen koaxial zu einem herzustellenden Sackloch angeordnete Ausnehmung für das bei der Herstellung des Sacklochs zu verdrängende Material vorgesehen, während im zweiten Teil der Negativform eine im Wesentlichen koaxial zum herzustellenden Sackloch angeordnete Führung für einen Stempel vorgesehen ist. Der Stempel der erfindungsgemäßen Vorrichtung wird dabei mittels einer Verstelleinrichtung verstellt, wobei die Verstelleinrichtung derart ausgebildet ist, dass sie den Stempel in unterschiedlichen Bewegungsabschnitten B₁, B₂ mit unterschiedlichen Vorschubgeschwindigkeiten v₁, v₂ verstellen kann. Hierdurch ist die Durchführung des erfindungsgemäßen Verfahrens mit zwei unterschiedlichen Bewegungsgeschwindigkeiten v₁, v₂ in zwei unterschiedlichen Bewegungsabschnitten B₁, B₂ möglich, wobei im ersten Bewegungsabschnitt B₁ aufgrund der dort höheren ersten Geschwindigkeit v₁ des Stempels ein Hochgeschwindigkeits-Scherschneiden erfolgen kann, während im zweiten Bewegungsabschnitt B₂ des Stempels mit der vergleichsweise hierzu deutlich geringeren zweiten Geschwindigkeit v₂ ein herkömmliches Scherschneiden erfolgen kann. Ein Durchmesser der Ausnehmung im ersten Teil der Negativform ist dabei kleiner als ein Durchmesser des Stempels, wodurch zwischen dem Stempel und der Ausnehmung eine Art Ringstufe entsteht, die zu einem Verdichten und damit auch zu einem innerlichen Verschweißen eines späteren Sacklochbodens führt. Alternativ dazu ist auch denkbar, dass der Durchmesser der Ausnehmung gleich groß ist wie ein Durchmesser des Stempels, wobei in diesem Fall die Ausnehmung eine Ringstufe aufweist, die zu einem Verdichten und damit auch zu einem innerlichen Verschweißen eines späteren Sacklochbodens führt.

Der zweite Teil der Negativform kann darüber hinaus im Wesentlichen orthogonal zu einer Stempelachse relativ zum ersten Teil der Negativform verstellbar sein, wodurch ein Abscheren des mittels des Stempels in die Ausnehmung fließgepressten Materials erfolgen kann. Mittels einer derartigen Vorrichtung kann somit erstmals das Herstellen eines Sackloches mittels kombiniertem Hochgeschwindigkeits-Scherschneiden und normalem Scherschneiden mit den in den vorherigen Absätzen beschriebenen Vorteilen erreicht werden.

Bei einer weiteren vorteilhaften Ausführungsform der erfindungsgemäßen Vorrichtung weist der Stempel einen Durchmesser D_{S} von ca. 3,5 bis 4,5 mm auf, insbesondere von ca. 4,1 mm. Zusätzlich oder alternativ kann die Ausnehmung im ersten Teil der Negativform einen Durchmesser D_{A} von ca. 3,6 mm aufweisen, woraus bereits ersichtlich wird, dass der Stempel gemäß der ersten Ausführungsform der Ausnehmung auf jeden Fall einen größeren Außendurchmesser aufweist, als der Innendurchmesser der Ausnehmung ist. Durch den im Vergleich zur Ausnehmung größeren Stempel hinsichtlich des Durchmessers kann das Verdichten des Sacklochbodens in einem Ringbereich erfolgen, in welchem der Stempel das zu verdrängende Material gegen einen stirnseitigen Rand der im Durchmesser kleineren Ausnehmung drückt. Hierdurch können insbesondere ein Stauchen und auch ein innerliches Verschweißen erfolgen. Dies gilt analog zu einer Ausnehmung, in welcher eine Ringstufe angeordnet ist.

Zweckmäßig ist der erste Teil der Negativform elastisch gelagert. Durch die elastische Lagerung des ersten Teils der Negativform kann insbesondere ein Teil der impulsartig aufgebrachten Bewegung des Stempels im ersten Bewegungsabschnitt B₁ ausgeglichen werden, was insbesondere dazu beiträgt, den ersten Teil der Negativform vor Schäden zu bewahren, die unter Umständen bei einem nicht elastisch gelagerten ersten Teil der Negativform aufgrund des hohen Impulses im ersten Bewegungsabschnitt B₁ auftreten können.

Die vorliegende Offenbarung beruht weiter auf dem allgemeinen Gedanken, einen Nutenstein nach dem zuvor genannten Verfahren herzustellen, wodurch ein derartiger Nutenstein ein äußerst präzises Sackloch erhält, welches zudem kostengünstig herstellbar ist. In dieses Sackloch lässt sich dann beispielsweise ein federbelastetes Abstützelement integrieren. Selbstverständlich kann ein derartiger Nutenstein zusätzlich auch eine Durchgangsöffnung aufweisen, die analog mit dem erfindungsgemäßen Verfahren hergestellt wird, wobei in diesem Fall der Stempel und die Ausnehmung den gleichen Durchmesser aufweisen. Über eine derartige Durchgangsöffnung, die anschließend noch mit einem Innengewinde versehen wird, kann beispielsweise eine Schraube zur Fixierung des Nutensteins gehalten werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der in den Ansprüchen definierten vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a-d: unterschiedliche Verfahrensschritte zur Durchführung eines erfindungsgemäßen Verfahrens zur Herstellung eines Sacklochs,
- Fig. 2: ein Geschwindigkeitszeitdiagramm zur Erläuterung des Verfahrens,
- Fig. 3: ein nach dem erfindungsgemäßen Verfahren hergestellter Nutenstein,
- Fig. 4: eine Schnittdarstellung durch ein Profil mit einem erfindungsgemäß hergestellten Nutenstein,
- Fig. 5a,b: jeweils eine Darstellung wie in den Fig. 1a und 1b, jedoch mit anderer Ausnehmung im ersten Teil.

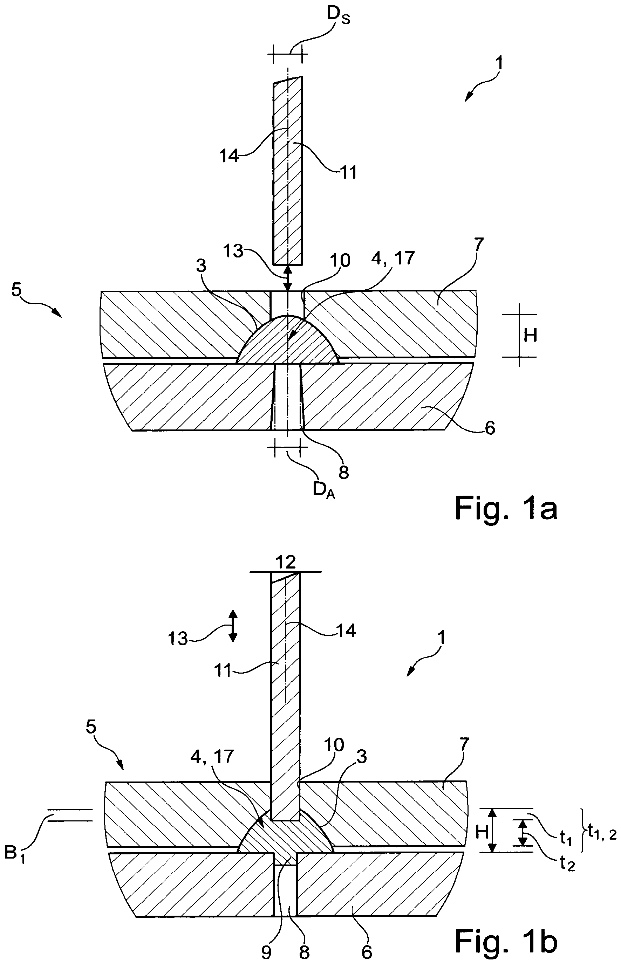

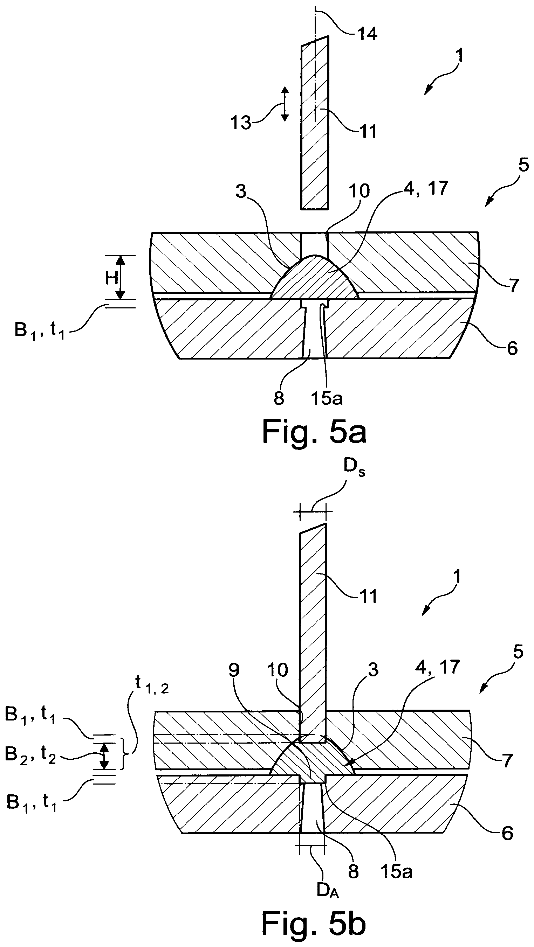

Entsprechend Fig. 1a-d und 5a,b ist eine erfindungsgemäße Vorrichtung 1 zur Durchführung des in den nächsten Absätzen erläuterten Verfahrens zur Herstellung eines Sacklochs 2 in einem, insbesondere mindestens eine gewölbte Oberfläche 3 aufweisenden, metallischen Werkstück 4 gezeigt. Die erfindungsgemäße Vorrichtung 1 weist dabei eine zumindest teilweise komplementär zu dem zu bearbeitenden Werkstück 4 ausgebildete Negativform 5 mit einem ersten Teil 6 (Matrize) und einem zweiten Teil 7 auf. Im ersten Teil 6 der Negativform 5 ist dabei eine im Wesentlichen koaxial zu dem herzustellenden Sackloch 2 angeordnete Ausnehmung 8 für bei der Herstellung des Sacklochs 2 zu verdrängendem Material 9 (vergleiche die Fig. 1b bis 1d) vorgesehen, wobei die Ausnehmung 8 sich vorzugsweise in Richtung des zu bearbeitenden Werkstücks 4 konisch verjüngt, sodass das in die Ausnehmung 8 fließgepresste Material 9 nach einem Abscheren selbständig nach unten ausfallen kann. Im zweiten Teil 7 der Negativform 5 ist dabei eine im Wesentlichen koaxial zum herzustellenden Sackloch 2 angeordnete Führung 10 für einen Stempel 11 (Patrize) vorgesehen. Mittels einer Verstelleinrichtung 12, die nur in der Fig. 1b stark schematisiert dargestellt ist, lässt sich der Stempel 11 in Axialrichtung 13, das heißt koaxial zum herzustellenden Sackloch 2 und zur Führung 10 sowie zur Ausnehmung 8 verstellen, wobei die Verstelleinrichtung 12 zudem derart ausgebildet ist, dass sie den Stempel 11 in unterschiedlichen Bewegungsabschnitten B₁ und B₂ mit unterschiedlichen Geschwindigkeiten v₁ und v₂ verstellen kann.

Ein Durchmesser D_{A} der Ausnehmung 8 im ersten Teil 6 der Negativform 5 ist dabei gemäß den Fig. 1a-d an der an das zu bearbeitende Werkstück 4 angrenzenden Stelle kleiner als ein Außendurchmesser D_{S} des Stempels 11 (vgl. Fig. 1a).

In den Fig. 5 a, b ist dabei im ersten Teil 6 der Negativform 5 ebenfalls eine im Wesentlichen koaxial zu dem herzustellenden Sackloch 2 angeordnete Ausnehmung 8 für bei der Herstellung des Sacklochs 2 zu verdrängendem Material 9 (vergleiche die Fig. 5b) vorgesehen, die jedoch eine Ringstufe 15a aufweist, so dass sich ein Durchmesser D_{A} im Bereich der Ringstufe 15a sprungartig verändert, in Richtung nach unten sprungartig reduziert. Unterhalb der in den Fig. 5a, 5b gezeigten Ringstufe 15a erweitert sich die Ausnehmung 8 vorzugsweise konisch, sodass in diesem Fall das in die Ausnehmung 8 fließgepresste Material 9 nach einem Abscheren nicht selbständig nach unten ausfällt, sondern an der Ringstufe 15a gehalten ist. Der (Innen-)Durchmesser D_{A} der Ausnehmung 8 im ersten Teil 6 oberhalb der Ringstufe 15a kann dabei dem Außendurchmesser D_{S} des Stempels 11 entsprechen. An der unteren Seite des ersten Teils 6 der Negativform 5 kann der Durchmesser D_{A} ebenfalls durch die konische Erweiterung wiederum dem Durchmesser D_{S} entsprechen. Die Tiefe t₁ der Ausnehmung 8 oberhalb der Ringstufe 15a sollte im Wesentlichen mindestens der Tiefe t₁ des ersten Bewegungsabschnittes B₁ (HGSS-Tiefe) entsprechen. Ebenfalls denkbar ist es, die Tiefe t₁ mit t₁ + x zu definieren, wobei x einer Steuergröße entspricht, ab wann das Einsetzen der Stauchung beginnen soll. Durch diese Ausgestaltung könnte eine elastische Lagerung des ersten Teils 6 der Negativform 5 entfallen, da das Material 9, das während des ersten Bewegungsabschnittes B₁ beim Hochgeschwindigkeits-Scherschneiden mit der ersten Geschwindigkeit v₁ ausgetrieben wird, die Matrize, das heißt den ersten Teil 6, nicht zerstörerisch treffen würde. Die Tiefe t₁ bis zur Ringstufe 15a beträgt somit ca. 0,01H ≤ t₁ ≤ 0,5H, vorzugsweise t₁ ≤ 0,1H, wobei H für die Gesamthöhe des Werkstücks 4 steht.

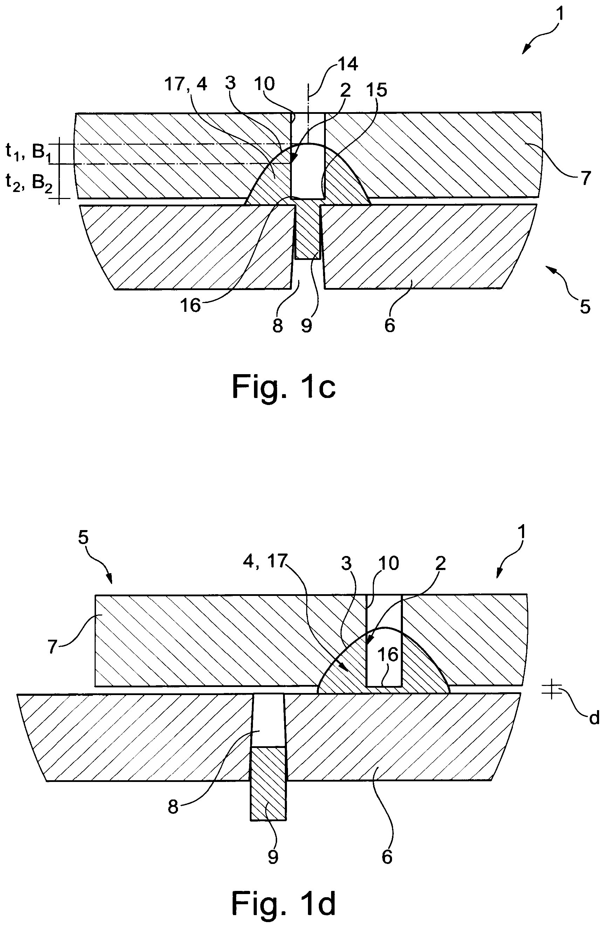

Zudem ist bei der erfindungsgemäßen Vorrichtung 1 der erste Teil 6 der Negativform 5 im Wesentlichen orthogonal zur Axialrichtung 13, das heißt hier zur Stempelachse 14 relativ zum zweiten Teil 7 der Negativform 5 verstellbar, wodurch ein Abscheren des bei der Herstellung des Sacklochs 2 in die Ausnehmung 8 fließgepressten Materials 9 erfolgen kann, wie dies gemäß der Fig. 1d dargestellt ist. Rein theoretisch dabei ist selbstverständlich auch denkbar, dass der zweite Teil 7 der Negativform 5 relativ zum ersten Teil 6 verstellbar ist oder dass beide Teile 6, 7 relativ zueinander verstellbar sind.

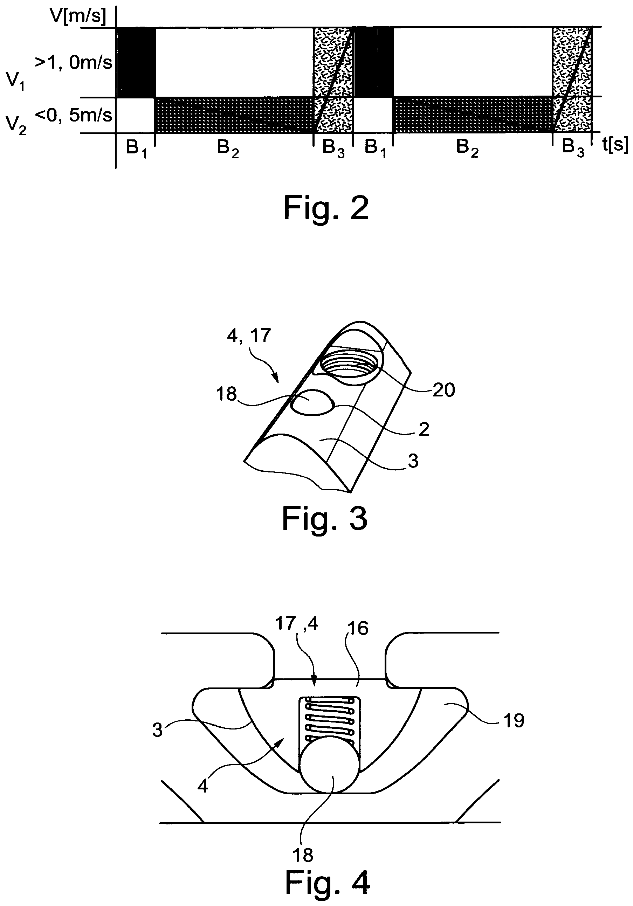

Das erfindungsgemäße Verfahren zur Herstellung des Sacklochs 2 funktioniert dabei wie folgt:
Zunächst wird die Negativform 5 mit dem ersten und zweiten Teil 6, 7 bereitgestellt und das zu bearbeitende Werkstück 4 darin angeordnet, wie dies gemäß der Fig. 1a, 5a dargestellt ist. Anschließend wird der Stempel 11 mittels der Verstelleinrichtung 12 in Axialrichtung 13 in Richtung des Werkstücks 4 verstellt, wobei der Stempel 11 nach einem ersten Kontakt mit dem Werkstück 4 im ersten Bewegungsabschnitt B₁ (vergleiche auch Fig. 2) mit einer ersten Geschwindigkeit v₁ in das Werkstück 4 gedrückt wird, wobei v₁ so hoch ist, dass das von dem Stempel 11 getroffene Material im ersten Bewegungsabschnitt B₁ in einem adiabatischen Zustand abgeschert wird. Dieser Zustand ist beispielsweise gemäß der Fig. 1b, 5b dargestellt. Der erste Teil 6 der Negativform 5 ist dabei elastisch gelagert, um insbesondere den während des ersten Bewegungsabschnitts B₁ auftreffenden hohen Impuls schadlos zu überstehen.

Anschließend erfolgt ein weiteres Drücken des Stempels 11 in das Werkstück 4 in einem zweiten Bewegungsabschnitt B₂ mit einer zur ersten Geschwindigkeit v₁ kleineren zweiten Geschwindigkeit v₂, so dass das von dem Stempel 11 getroffene Material im zweiten Bewegungsabschnitt B₂ geschert und zugleich an einer durch die unterschiedlichen Durchmesser D_{A} und D_{S} der Ausnehmung 8 und des Stempels 11 gebildeten Ringstufe 15 (vergleiche Fig. 1c) oder an der Ringstufe 15a verdichtet und zudem teilweise in die Ausnehmung 8 fließgepresst wird. In der Fig. 1c ist dabei der Stempel 11 der Übersichtlichkeit halber nicht mehr mit dargestellt.

In dem optionalen sich daran anschließenden Verfahrensschritt, der gemäß der Fig. 1d dargestellt ist, erfolgt ein Relativverstellen des ersten Teils 6 relativ zum zweiten Teil 7 der Negativform 5 oder umgekehrt im Wesentlichen orthogonal zur Axialrichtung 13 bzw. zur Stempelachse 14, die zugleich auch eine Sacklochachse bzw. eine Ausnehmungsachse darstellt, und damit ein Abscheren des in die Ausnehmung 8 verdrängten Materials 9. Anschließend kann das mit dem erfindungsgemäßen Sackloch 2 ausgestattete Werkstück 4 aus der Negativform 5 entnommen werden.

Betrachtet man beispielsweise die Fig. 2, so kann man dort die einzelnen Bewegungsabschnitte B₁ und B₂ sowie die zugehörigen Geschwindigkeiten v erkennen.

Im ersten Bewegungsabschnitt B₁ wird der Stempel 5 mit einer ersten Geschwindigkeit v₁ von v₁ ≥ 1 m/s, insbesondere mit 6 m/s ≤ v₁ ≤ 8 m/s, besonders bevorzugt mit v₁ ≈ 7 m/s, in das Werkstück 4 gedrückt. Dabei erfolgt ein sogenanntes Hochgeschwindigkeits-Scherschneiden, mit welchem eine besonders glatte Oberfläche erzielbar ist. Ein Fließpressen kann hierbei jedoch aufgrund der hohen ersten Geschwindigkeit v₁ und des damit einhergehenden hohen Impulses nicht erfolgen. Im sich daran anschließenden zweiten Bewegungsabschnitt B₂ sinkt die zweite Geschwindigkeit v₂ deutlich ab und beträgt vorzugsweise < 0,5 m/s, insbesondere ≤ 0,15 m/s oder sogar besonders bevorzugt v₂ ≤ 0,005 m/s, wodurch ein Fließpressen des vom Stempel 11 verdrängten Materials 9 in die Ausnehmung 8 erfolgen kann. Der letzte Bewegungsabschnitt B₃ bezeichnet lediglich ein Zurückfahren des Stempels 11 in seine Ausgangsposition.

Im ersten Bewegungsabschnitt B₁ wird der Stempel 11 mit einer Tiefe t₁ von ca. 0,01H ≤ t₁ ≤ 0,5H in das Werkstück 4 gedrückt, wobei H für die Gesamthöhe des Werkstücks 4 steht. Der Stempel 11 wird dabei in dem ersten Bewegungsabschnitt B₁ mit vorzugsweise weniger als 10%, das heißt t₁ ≤ 0,1H in das Werkstück 4 eingedrückt. Im ersten und zweiten Bewegungsabschnitt B₁, B₂ wird der Stempel 11 mit einer Gesamttiefe t_{1,2} = t₁ + t₂ von ca. 0,8H ≤ t_{1,2} ≤ 0,9H in das Werkstück 4 eingedrückt, so dass nach dem Entfernen des Stempels 11 aus dem Sackloch 2 ein Sacklochboden 16 mit einer Dicke d von ca. 0,1 bis 0,2H verbleibt.

Ist das Werkstück 4 beispielsweise als Nutenstein 17 (vgl. Fig. 3 und 4) ausgebildet, so kann dieser eine Höhe H von ca. 7,3 mm aufweisen, eine Gesamttiefe des Sacklochs t_{1,2} von ca. 6,3 mm und einen Sacklochboden 16 mit einer Dicke bzw. Stärke d von ca. 1,0 mm.

Das hergestellte Werkstück 4 kann beispielsweise ein Nutenstein 17 sein, der in dem erfindungsgemäß hergestellten Sackloch 2 ein federbeaufschlagtes Fixierelement 18 aufnimmt, über welches der Nutenstein 17 in einer hinterschnittenen Nut 19 (vergleiche Fig. 4) gehalten werden kann. Selbstverständlich kann der Nutenstein 17 neben dem Sackloch 2 auch noch eine auf ähnliche Weise hergestellte Durchgangsöffnung 20 besitzen (vergleiche Fig. 3), in welche ein Innengewinde zur Aufnahme einer Befestigungsschraube eingeschnitten ist. Dabei ist selbstverständlich auch klar, dass der gezeigte Nutenstein 17 nicht unbedingt eine gewölbte Oberfläche 3 besitzen muss, sondern selbstverständlich auch als rechteckiger, oder im Querschnitt dreieckiger Stein ausgebildet sein kann.

Mit dem erfindungsgemäßen Verfahren und der erfindungsgemäßen Vorrichtung 1 lässt sich ein besonders exaktes Sackloch 2 fertigungstechnisch und zudem kostengünstig herstellen.

## Patentansprüche

1. Verfahren zur Herstellung eines Sacklochs (2) in einem, insbesondere mindestens eine gewölbte Oberfläche (3) aufweisenden, metallischen Werkstück (4), wobei, ausgehend etwa von insbesondere der waagerecht verlaufenden Wölbungstangente und in etwa orthogonal dazu, in Richtung des Werkstücks (4) mittels eines Stempels (11) ein Teil an Material (9) des Werkstücks (4) verschoben wird, mit
- Bereitstellen einer im Wesentlichen zumindest teilweise komplementär zum Werkstück (4) ausgebildeten Negativform (5) mit einem ersten Teil (6) und einem zweiten Teil (7), wobei im ersten Teil (6) der Negativform (5) eine im Wesentlichen koaxial zum herzustellenden Sackloch (2) angeordnete Ausnehmung (8) für bei der Herstellung des Sacklochs (2) verdrängtem Material (9) und im zweiten Teil (7) der Negativform (5) eine im Wesentlichen koaxial zum herzustellenden Sackloch (2) angeordnete Führung (10) für den Stempel (11) vorgesehen ist, und wobei ein Durchmesser D_{A} der Ausnehmung (8), in einer ersten Alternative, kleiner ist als ein Durchmesser D_{S} des Stempels (11) oder, in einer zweiten Alternative, gleich groß ist wie der Durchmesser D_{S} des Stempels (11) und in dieser zweiten Alternative die Ausnehmung (8) eine Ringstufe (15a), an der sich der Durchmesser D_{A} sprungartig verändert, aufweist,
- Anordnen des Werkstücks (4) in der Negativform (5),
- Verstellen des Stempels (11) in Axialrichtung (13) in der Führung (10) in Richtung des Werkstücks (4), wobei der Stempel (11) nach einem ersten Kontakt mit dem Werkstück (4) in einem ersten Bewegungsabschnitt B₁ mit einer ersten Geschwindigkeit v₁ von v₁ ≥ 1 m/s, insbesondere mit 6 m/s ≤v₁ ≤ 8 m/s, besonders bevorzugt mit v₁ ≈ 7 m/s, in das Werkstück (4) gedrückt wird, so dass das von dem Stempel (11) getroffene Material im ersten Bewegungsabschnitt B₁ in einem adiabatischen Zustand geschert wird, **gekennzeichnet durch**,
- ein Drücken des Stempels (11) im ersten Bewegungsabschnitt B₁ mit einer Tiefe t₁ von ca. 0,01H ≤ t₁ ≤ 0,5H, mit H = Höhe des Werkstücks, in das Werkstück (4),
- weiteres Drücken des Stempels (11) in das Werkstück (4) in einem zweiten Bewegungsabschnitt B₂ mit einer zur ersten Geschwindigkeit v₁ kleineren zweiten Geschwindigkeit v₂ ≤ 0,15 m/s, insbesondere mit v₂ ≤ 0,005 m/s, so dass das von dem Stempel (11) getroffene Material im zweiten Bewegungsabschnitt B₂ geschert und an einer durch die unterschiedlichen Durchmesser D_{A}, D_{S} der Ausnehmung (8) und des Stempels (11) gebildeten Ringstufe (15) oder an der Ringstufe (15a) in der Ausnehmung (8) verdichtet und teilweise in die Ausnehmung (8) fließgepresst wird,
- insbesondere ein Relativverstellen des ersten Teils (6) zum zweiten Teil (7) im Wesentlichen orthogonal zur Axialrichtung (13) und Abscheren des in die Ausnehmung (8) verdrängten Materials (9).

2. Verfahren nach Anspruch 1,
**dadurch gekennzeichnet,**
**dass** der Stempel (11) im ersten und zweiten Bewegungsabschnitt B₁, B₂ mit einer Gesamttiefe t_{1,2} von ca. 0,8H ≤ t_{1,2} ≤ 0,9H (mit H = Höhe des Werkstücks) in das Werkstück (4) gedrückt wird.

3. Verfahren nach Anspruch 1 oder 2,
**dadurch gekennzeichnet,**
**dass** der Stempel (11) im ersten Bewegungsabschnitt B₁ vorzugsweise weniger als ca. 10% der Höhe H in das Werkstück (4) gedrückt wird.

4. Verfahren nach einem der vorhergehenden Ansprüche, **dadurch gekennzeichnet, dass** das Werkstück (4) als Nutenstein (17) ausgebildet ist.

5. Verfahren nach Anspruch 4, **dadurch gekennzeichnet, dass**
- der Nutenstein (17) eine Höhe H von ca. 7,3 mm aufweist, und/oder
- das Sackloch (2) eine Gesamttiefe t_{1,2} von ca. 6,3 mm aufweist, und/oder
- ein Sacklochboden (16) eine Stärke d von ca. 1,0 mm aufweist.

6. Vorrichtung (1) zur Durchführung des Verfahrens nach einem der vorhergehenden Ansprüche, mit:
- einem Stempel (11) und einer im Wesentlichen zumindest teilweise komplementär zu einem zu bearbeitenden Werkstück (4) ausgebildeten Negativform (5) mit einem ersten Teil (6) und einem zweiten Teil (7), wobei im ersten Teil (6) eine im Wesentlichen koaxial zu einem herzustellenden Sackloch (2) angeordnete Ausnehmung (8) für bei der Herstellung des Sacklochs (2) verdrängtem Material (9) und im zweiten Teil (7) der Negativform (5) eine im Wesentlichen koaxial zum herzustellenden Sackloch (2) angeordnete Führung (10) für einen Stempel (11) vorgesehen ist, und wobei ein Durchmesser D_{A} der Ausnehmung (8), in einer ersten Alternative, kleiner ist als ein Durchmesser Ds des Stempels (11) oder, in einer zweiten Alternative, gleich groß ist wie der Durchmesser Ds des Stempels (11) und in dieser zweiten Alternative die Ausnehmung (8) eine Ringstufe (15a), an der sich der Durchmesser D_{A} sprungartig verändert, aufweist,
- einer Verstelleinrichtung (12), welche geeignet ist, den Stempel (11) unterschiedlichen Bewegungsabschnitten B₁, B₂ mit unterschiedlichen Geschwindigkeiten zu verstellen, wobei der Stempel (11) nach einem ersten Kontakt mit dem Werkstück (4) in einem ersten Bewegungsabschnitt B1 mit einer ersten Geschwindigkeit v₁ von v₁ ≥ 1 m/s, insbesondere mit 6 m/s ≤v₁ ≤ 8 m/s, besonders bevorzugt mit v₁ ≈ 7 m/s, in das Werkstück (4) eingedrückt werden kann, so dass das von dem Stempel (11) getroffene Material im ersten Bewegungsabschnitt B1 in einem adiabatischen Zustand geschert werden kann,
**dadurch gekennzeichnet, dass**
- die Verstelleinrichtung geeignet ist, den Stempel so zu verstellen, dass er im ersten Bewegungsabschnitt B₁ mit einer Tiefe t₁ von ca. 0,01H ≤ t₁ ≤ 0,5H, mit H = Höhe des Werkstücks, in das Werkstück (4) eingedrückt werden kann,
- die Verstelleinrichtung geeignet ist, den Stempel (11) so zu verstellen, dass er in einem zweiten Bewegungsabschnitt B2 in das Werkstück (4) mit einer zur ersten Geschwindigkeit v₁ kleineren zweiten Geschwindigkeit
v₂ ≤ 0,15 m/s, insbesondere mit v₂ ≤ 0,005 m/s, eingedrückt werden kann, so dass das von dem Stempel (11) getroffene Material im zweiten Bewegungsabschnitt B₂ geschert und an einer durch die unterschiedlichen Durchmesser D_{A}, Ds der Ausnehmung (8) und des Stempels (11) gebildeten Ringstufe (15) oder an der Ringstufe (15a) in der Ausnehmung (8) verdichtet und teilweise in die Ausnehmung (8) fließgepresst werden kann,
- wobei insbesondere der erste Teil (6) der Negativform (5) im Wesentlichen orthogonal zur Axialrichtung (13) relativ zum zweiten Teil (7) der Negativform (5) verstellbar ist, oder umgekehrt.

7. Vorrichtung nach Anspruch 6, **dadurch gekennzeichnet,**
- **dass** der Stempel (11) einen Durchmesser D_{S} von 3,5 mm ≤ D ≤ 4,5 mm, insbesondere einen Durchmesser D_{S} von ca. 4,1 mm, aufweist, und/oder
- **dass** die Ausnehmung (8) in dem ersten Teil (6) der Negativform (5) einen Durchmesser D_{A} von ca. 3,6 mm, aufweist, und/oder
- **dass** ein Verhältnis des Durchmessers D_{A} der Ausnehmung (8) zum Durchmesser D_{S} des Stempels (11) ca. 0,8 ≤ D_{A}/D_{S} ≤ 0,9 beträgt.

8. Vorrichtung nach Anspruch 6 oder 7, **dadurch gekennzeichnet,**
**dass** der erste Teil (6) der Negativform (5) elastisch gelagert ist.

## Claims

1. Method for the production of a blind hole (2) in a metallic workpiece (4) having in particular at least one domed surface (3), wherein, starting out for example from in particular the horizontally running tangent of the domed surface and approximately orthogonally thereto, a portion of material (9) of the workpiece (4) is displaced in the direction of the workpiece (4) by means of a punch (11), with
- provision of a negative form (5) formed essentially at least partly complementary to the workpiece (4) with a first portion (6) and a second portion (7), wherein a recess (8), disposed essentially coaxially to the blind hole (2) being produced, is provided in the first portion (6) of the negative form (5) for material (9) displaced in the production of the blind hole (2) and a guide (10), disposed essentially coaxially to the blind hole (2) being produced, is provided for the punch (11) in the second portion (7) of the negative form (5), and wherein a diameter D_{A} of the recess (8), in a first alternative, is smaller than a diameter D_{S} of the punch (11) or, in a second alternative, is the same size as the diameter D_{S} of the punch (11) and in this second alternative the recess (8) has an annular step (15a), where the diameter D_{A} changes abruptly,
- disposing of the workpiece (4) in the negative form (5),
- moving of the punch (11) in axial direction (13) in the guide (10) towards the workpiece (4), wherein, after a first contact with the workpiece (4), the punch (11) is pressed into the workpiece (4) in a first movement section B₁ at a first velocity v₁ of v₁ ≥ 1 m/s, in particular at 6 m/s ≤ v₁ ≤ 8 m/s, particularly preferably at v₁ ≈ 7 m/s, so that the material encountered by the punch (11) in the first movement section B₁ is sheared in an adiabatic state, **characterised by**
- a pressing of the punch (11) into the workpiece (4) in the first movement section B₁ with a depth t₁ of approx. 0.01H ≤ t₁ ≤ 0.5H, where H = height of the workpiece,
- further pressing of the punch (11) into the workpiece (4) in a second movement section B₂ at a second velocity v₂ ≤ 0.15 m/s, which is less than the first velocity v₁, in particular at v₂ ≤ 0.005 m/s, so that the material encountered by the punch (11) is sheared in the second movement section B₂ and compacted on an annular step (15) formed by the different diameters D_{A}, D_{S} of the recess (8) and of the punch (11) or on the annular step (15a) in the recess (8) and is partly extruded into the recess (8),
- in particular a relative movement of the first portion (6) to the second portion (7) essentially orthogonally to the axial direction (13) and shearing-off of the material (9) displaced into the recess (8).

2. Method according to claim 1,
**characterised in**
**that** the punch (11) is pressed into the workpiece (4) in the first and second movement sections B₁, B₂ with a total depth t_{1,2} of approx. 0.8H ≤ t_{1,2} ≤ 0.9H (where H = height of the workpiece).

3. Method according to claim 1 or 2,
**characterised in**
**that** the punch (11) is pressed into the workpiece (4) in the first movement section B₁ preferably less than approx. 10 % of the height H.

4. Method according to any of the preceding claims, **characterised in that** the workpiece (4) is formed as groove block (17).

5. Method according to claim 4, **characterised in that**
- the groove block (17) has a height H of approx. 7.3 mm, and/or
- the blind hole (2) has a total depth t_{1,2} of approx. 6.3 mm, and/or
- a blind hole bottom (16) has a thickness d of approx. 1.0 mm.

6. Device (1) for carrying out the method according to any of the preceding claims, with:
- a punch (11) and a negative form (5) formed essentially at least partly complementary to a workpiece (4) to be worked with a first portion (6) and a second portion (7), wherein a recess (8), disposed essentially coaxially to a blind hole (2) being produced, is provided in the first portion (6) for material (9) displaced in the production of the blind hole (2) and a guide (10), disposed essentially coaxially to the blind hole (2) being produced, is provided for a punch (11) in the second portion (7) of the negative form (5), and wherein a diameter D_{A} of the recess (8), in a first alternative, is smaller than a diameter D_{S} of the punch (11) or, in a second alternative, is the same size as the diameter D_{S} of the punch (11) and in this second alternative the recess (8) has an annular step (15a), where the diameter D_{A} changes abruptly,
- a displacement device (12), which is suitable for moving the punch (11) in different movement sections B₁, B₂ at different velocities, wherein, after a first contact with the workpiece (4), the punch (11) can be pressed into the workpiece (4) in a first movement section B₁ at a first velocity v₁ of v₁ ≥ 1 m/s, in particular at 6 m/s ≤ v₁ ≤ 8 m/s, particularly preferably at v₁ ≈ 7 m/s, so that the material encountered by the punch (11) in the first movement section B₁ can be sheared in an adiabatic state, **characterised in that**
- the displacement device is suitable for moving the punch in such a way that it can be pressed into the workpiece (4) in the first movement section B₁ with a depth t₁ of approx. 0.01H ≤ t₁ ≤ 0.5H, where H = height of the workpiece,
- the displacement device is suitable for moving the punch (11) in such a way that it can be pressed into the workpiece (4) in a second movement section B₂ at a second velocity v₂ ≤ 0.15 m/s, which is less than the first velocity v₁, in particular at v₂ ≤ 0.005 m/s, so that the material encountered by the punch (11) can be sheared in the second movement section B₂ and compacted on an annular step (15) formed by the different diameters D_{A}, D_{S} of the recess (8) and of the punch (11) or on the annular step (15a) in the recess (8) and can be partly extruded into the recess (8),
- wherein in particular the first portion (6) of the negative form (5) is movable essentially orthogonally to the axial direction (13) relative to the second portion (7) of the negative form (5), or vice versa.

7. Device according to claim 6,
**characterised in**
- **that** the punch (11) has a diameter D_{S} of 3.5 mm ≤ D ≤ 4.5 mm, in particular a diameter D_{S} of approx. 4.1 mm, and/or
- **that** the recess (8) in the first portion (6) of the negative form (5) has a diameter D_{A} of approx. 3.6 mm and/or
- **that** a ratio of the diameter D_{A} of the recess (8) to the diameter D_{S} of the punch (11) is approx. 0.8 ≤ D_{A}/D_{S} ≤ 0.9.

8. Device according to claim 6 or 7,
**characterised in**
**that** the first portion (6) of the negative form (5) is elastically mounted.

## Revendications

1. Procédé de fabrication d'un trou borgne (2) dans une pièce (4) métallique, présentant au particulier au moins une surface incurvée (3), dans lequel, partant à peu près en particulier de la tangente de courbure s'étendant horizontalement et à peu près orthogonalement à celle-ci, en direction de la pièce (4) au moyen d'un poinçon (11) une partie de matériau (9) de la pièce (4) est déplacé, avec
- mise à disposition d'un moule négatif (5) réalisé sensiblement au moins en partie de manière complémentaire à la pièce (4) avec une première partie (6) et une deuxième partie (7), dans lequel dans la première partie (6) du moule négatif (5), un évidement (8) agencé sensiblement coaxialement au trou borgne (2) à fabriquer pour matériau (9) refoulé lors de la fabrication du trou borgne (2) est prévu et dans la deuxième partie (7) du moule négatif (5), un guidage (10) agencé sensiblement coaxialement au trou borgne (2) à fabriquer pour le poinçon (11) est prévu, et dans lequel un diamètre D_{A} de l'évidement (8), dans une première alternative, est plus petit qu'un diamètre D_{S} du poinçon (11) ou, dans une deuxième alternative, a la même taille que le diamètre D_{S} du poinçon (11) et dans cette deuxième alternative, l'évidement (8) présente un gradin annulaire (15a), au niveau duquel le diamètre D_{A} change brusquement,
- agencement de la pièce (4) dans le moule négatif (5),
- déplacement du poinçon (11) dans la direction axiale (13) dans le guidage (10) en direction de la pièce (4), dans lequel le poinçon (11) après un premier contact avec la pièce (4) est pressé dans une première section de déplacement B₁ avec une première vitesse v₁ de v₁ ≥ 1 m/s, en particulier avec 6 m/s ≤ v₁ ≤ 8 m/s, le plus préférentiellement avec v₁ ≈ 7 m/s, dans la pièce (4), de sorte que le matériau touché par le poinçon (11) est cisaillé dans la première section de déplacement B₁ dans un état adiabatique
**caractérisé par**,
- une pression du poinçon (11) dans la première section de déplacement B₁ avec une profondeur t₁ d'environ 0,01H ≤ t₁ ≤ 0,5H, avec H = hauteur de la pièce, dans la pièce (4),
- autre pression du poinçon (11) dans la pièce (4) dans une deuxième section de déplacement B₂ avec une deuxième vitesse inférieure à la première vitesse v₁, v₂ ≤ 0,15 m/s, en particulier avec v₂ ≤ 0,005 m/s, de sorte que le matériau touché par le poinçon (11) est cisaillé dans la deuxième section de déplacement B₂ et au niveau d'un gradin annulaire (15) formé par les différents diamètres D_{A}, D_{S} de l'évidement (8) et du poinçon (11) ou au niveau du gradin annulaire (15a) dans l'évidement (8) est comprimé et extrudé en partie dans l'évidement (8),
- en particulier un déplacement relatif de la première partie (6) par rapport à la deuxième partie (7) sensiblement orthogonal à la direction axiale (13) et cisaillement du matériau (9) refoulé dans l'évidement (8).

2. Procédé selon la revendication 1,
**caractérisé en ce**
**que** le poinçon (11) est pressé dans la première et deuxième section de déplacement B₁, B₂ avec une profondeur totale t_{1,2} d'environ 0,8H ≤ t_{1,2} ≤ 0,9H (avec H = hauteur de la pièce) dans la pièce (4).

3. Procédé selon la revendication ou 2,
**caractérisé en ce**
**que** le poinçon (11) est pressé dans la première section de déplacement B₁ de préférence moins qu'environ 10 % de la hauteur H dans la pièce (4).

4. Procédé selon l'une quelconque des revendications précédentes, **caractérisé en ce que** la pièce (4) est réalisée en tant que clavette (17).

5. Procédé selon la revendication 4, **caractérisé en ce que**
- la clavette (17) présente une hauteur H d'environ 7,3 mm, et/ou
- le trou borgne (2) présente une profondeur totale t_{1,2} d'environ 6,3 mm et/ou
- un fond de trou borgne (16) présente une épaisseur d d'environ 1,0 mm.

6. Dispositif (1) pour la réalisation du procédé selon l'une quelconque des revendications précédentes, avec :
- un poinçon (11) et un moule négatif (5) réalisé sensiblement au moins en partie de manière complémentaire à une pièce (4) à traiter avec une première partie (6) et une deuxième partie (7), dans lequel dans la première partie (6), un évidement (8) agencé sensiblement coaxialement à un trou borgne (2) à fabriquer pour matériau (9) refoulé lors de la fabrication du trou borgne (2) est prévu et dans la deuxième partie (7) du moule négatif (5), un guidage (10) agencé sensiblement coaxialement au trou borgne (2) à fabriquer pour un poinçon (11) est prévu, et dans lequel un diamètre D_{A} de l'évidement (8), dans une première alternative, est plus petit qu'un diamètre D_{S} du poinçon (11) ou, dans une deuxième alternative, a la même taille que le diamètre D_{S} du poinçon (11) et dans cette deuxième alternative, l'évidement (8) présente un gradin annulaire (15a), au niveau duquel le diamètre D_{A} change brusquement,
- un dispositif de déplacement (12), lequel convient pour déplacer le poinçon (11) dans différentes sections de déplacement B₁, B₂ avec différentes vitesses, dans lequel le poinçon (11) peut être enfoncé après un premier contact avec la pièce (4) dans une première section de déplacement B1 avec une première vitesse v₁ de v1 ≥ 1 m/s, en particulier avec 6 m/s ≤ v₁ ≤ 8 m/s, le plus préférentiellement avec v1 ≈ 7 m/s, dans la pièce (4), de sorte que le matériau touché par le poinçon (11) puisse être cisaillé dans la première section de déplacement B1 dans un état adiabatique, **caractérisé en ce que**
- le dispositif de déplacement convient pour déplacer le poinçon de sorte qu'il puisse être enfoncé dans la première section de déplacement B₁ avec une profondeur t₁ d'environ 0,01H ≤ t₁ ≤ 0,5H, avec H = hauteur de la pièce, dans la pièce (4),
- le dispositif de déplacement convient pour déplacer le poinçon (11) de sorte qu'il puisse être enfoncé dans une deuxième section de déplacement B2 dans la pièce (4) avec une deuxième vitesse inférieure à la première vitesse v₁ v₂ ≤ 0,15 m/s, en particulier avec v₂ ≤ 0,005 m/s, de sorte que le matériau touché par le poinçon (11) puisse être cisaillé dans la deuxième section de déplacement B₂ et au niveau d'un gradin annulaire (15) formé par les différents diamètres D_{A}, D_{S} de l'évidement (8) et du poinçon (11) ou au niveau du gradin annulaire (15a) dans l'évidement (8) puisse être comprimé et extrudé en partie dans l'évidement (8),
- dans lequel en particulier la première partie (6) du moule négatif (5) peut être déplacée de manière sensiblement orthogonale à la direction axiale (13) par rapport à la deuxième partie (7) du moule négatif (5), ou inversement.

7. Dispositif selon la revendication 6,
**caractérisé en ce**
- **que** le poinçon (11) présente un diamètre D_{S} de 3,5 mm ≤ D ≤ 4,5 mm, en particulier un diamètre D_{S} d'environ 4,1 mm, et/ou
- **que** l'évidement (8) présente dans la première partie (6) du moule négatif (5) un diamètre D_{A} d'environ 3,6 mm, et/ou
- **qu'**un rapport du diamètre D_{A} de l'évidement (8) par rapport au diamètre D_{S} du poinçon (11) est d'environ 0,8 ≤ D_{A}/D_{S} ≤ 0,9.

8. Dispositif selon la revendication 6 ou 7,
**caractérisé en ce**
**que** la première partie (6) du moule négatif (5) est logé élastiquement.
